Europäisches Patentamt

(19) European Patent Office

Office européen des brevets

(11) Publication number: **0 028 055**
**B1**

(12) **EUROPEAN PATENT SPECIFICATION**

(45) Date of publication of patent specification: **27.04.83**

(51) Int. Cl.³: **F 16 K 1/14, F 16 K 24/00 //G21C7/12**

(21) Application number: **80302587.3**

(22) Date of filing: **29.07.80**

(54) Ball valve.

(30) Priority: **24.10.79 US 87896**

(43) Date of publication of application:
**06.05.81 Bulletin 81/18**

(45) Publication of the grant of the patent:
**27.04.83 Bulletin 83/17**

(84) Designated Contracting States:
**CH DE FR GB IT LI**

(56) References cited:
**AU - B - 461 365**
**DE - U - 1 763 661**
**FR - A - 744 847**
**FR - A - 1 588 396**
**US - A - 2 645 448**
**US - A - 3 400 440**
**US - A - 3 547 399**

(73) Proprietor: **THE BABCOCK & WILCOX COMPANY**
**1010 Common Street P.O. Box 60035**
**New Orleans Louisiana 70160 (US)**

(72) Inventor: **Smith, Robert C.**
**127 Bartlett Street**
**Bremen Ohio 43107 (US)**

(74) Representative: **Cotter, Ivan John et al,**
**D. YOUNG & CO. 10 Staple Inn**
**London WC1V 7RD (GB)**

Courier Press, Leamington Spa, England.

## Ball valve

The present invention relates to a ball valve for regulating the flow of fluid through a device. Such device may be, for example, a device for closing a tubular object, more particularly a device for closing a control rod drive mechanism which is installed on a nuclear reactor.

A type of nuclear reactor known as a Pressurized Water Reactor uses water which is maintained at a high pressure and which is caused to circulate through the reactor primary coolant system as a means of removing the heat generated by the nuclear fuel in the reactor core. The filling of the primary coolant system in this type of reactor is not without its problems. During the filling operation, as the water level rises above the level of the coolant system circulation pipes, the air remaining in the upper portions of the reactor vessel, the vessel head, and the control rod drive mechanism becomes trapped preventing complete filling of the coolant system. In order to complete the filling operation, the closure devices used for the control rod drive mechanisms must be vented to allow the trapped air to escape. Similarly, when the water level in the coolant system must be reduced as, for example, at refueling time, the closure devices must be vented to allow air to enter the control rod drive mechanisms so that the cooling water can be readily drained from the reactor. In order to accomplish this venting operation, vent valves have typically been incorporated into the closure devices. Through repeated use and because of inherent design problems, after a period of time these vent valves may not seat properly and can require excessive maintenance, repair, or replacement resulting in increased exposure of maintenance personnel to nuclear radiation due to the time required to perform such functions. In addition, in most instances these valves require the use of a special venting tool to operate same.

Because of this, it has become desirable to develop a closure assembly for a control rod drive mechanism that has venting means incorporated therein and which retains proper sealing capabilities after repeated use and does not require a special venting tool to operate same.

FR—A—744 847 discloses a ball valve for regulating the flow of fluid through a device, the ball valve comprising a first valve seat within the device, the first valve seat having a conical seating surface formed therein and an orifice passing through the valve seat and intersecting the conical seating surface, a second valve seat within the device and oppositely disposed from the first valve seat, the second valve seat having a conical seating surface formed therein, and a ball interposed between the first and second valve seats for selective engagement and disengagement with the valve seats to cause closing and opening of the orifice to regulate the flow of fluid therethrough.

According to the present invention there is provided a ball valve for regulating the flow of fluid through a device, the ball valve comprising a valve seat within the device, the valve seat having a conical seating surface formed therein and an orifice passing through the valve seat and intersecting the conical seating surface, a ball seat within the device and oppositely disposed from the valve seat, the ball seat having a conical seating surface formed therein, and a ball interposed between the valve seat and the ball seat for selective engagement and disengagement with the valve seat to cause closing and opening of the orifice to regulate the flow of fluid therethrough, characterised in that means is provided for biasing the ball away from the conical seating surface in the valve seat, the valve seat is longitudinally adjustable relative to the ball seat to provide said selective engagement and disengagement of the ball with the valve seat, and one of the seats is laterally movable with respect to the other to cause the ball to be self-centering with respect to the seats when the seats are adjusted longitudinally with respect to each other.

Ball valves embodying the invention may be used for regulating the flow of fluid through various devices. In a preferred embodiment of the invention described below the device is a closure device and the ball valve enables venting of the article closed by the device. More specifically, in the preferred embodiment, the device is a closure or sealing device for a control rod drive mechanism for a nuclear reactor.

The preferred embodiment of the present invention solves or at least alleviates the aforementioned problems associated with the prior art by providing a closure device that has a vent valve incorporated therein. The vent valve comprises a conical sealing ball seat in a body portion of the closure device, a spring loaded ball, and a floating conical force application ball seat in a vent nut which is threadably attached to the body portion. Since conical ball seats are used and inasmuch as one of the seats is 'floating', the included angle of each ball seat is not critical and does not have to be the same for both ball seats, and the axes of the ball seats do not have to be parallel or concentric. The ball seat axes must, however, intercept the center of the ball and this happens automatically since the floating ball seat in the vent nut results in a 'self-centering' seat and ball combination which compensates for any reasonable lack of alignment between valve components. Inasmuch as the floating ball seat and ball are 'self-centering', a uniform compressive force is applied to the ball resulting in minimization of any compressive damage to the ball seats and the ball even after repeated usage. In addition, the line contact established between the floating ball seat and the ball allows the application of a substantially greater force to the ball than if the force is applied to the ball by a flat surface. This greater force ensures a tight seal at the line contact between the ball and the fixed conical ball seat in the valve body. The use of two conical ball seats and a spring-loaded ball results in the application of an evenly distributed compressive force over minor circumferences of the ball.

The invention will be more clearly understood from a review of the following description, given by way of illustrative and nonlimiting example, of the preferred embodiment. The preferred embodiment is illustrated in the accompanying drawings, in which:

Figure 1 is a cross-sectional view of a closure insert assembly embodying the present invention;

Figure 2 is a cross-sectional view of the top portion of a typical control rod drive mechanism to be sealed and vented by the closure insert assembly;

Figure 3 is a cross-sectional view of the closure insert assembly threadably attached to a typical control rod drive mechanism and illustrates the relative position of a ball with respect to conical ball seats when a vent valve is in the closed position; and

Figure 4 is a cross-sectional view of the closure insert assembly, similar to that of Figure 3, and illustrates the relative position of the ball with respect to the conical ball seats when the vent valve is in the open position.

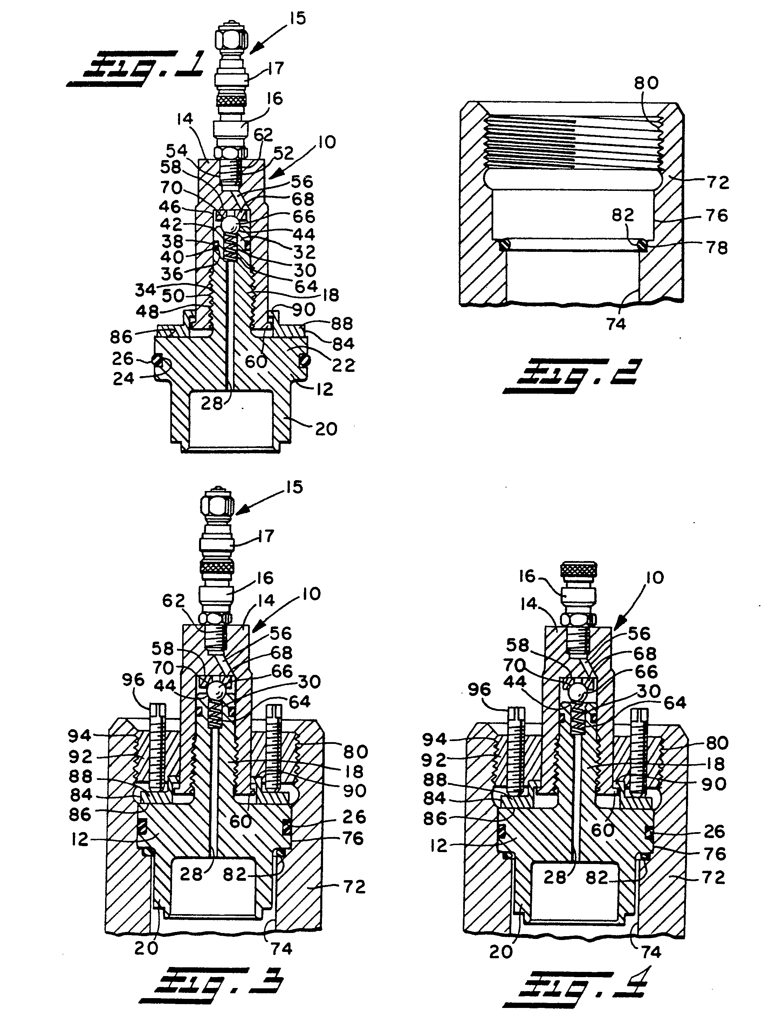

Referring now to the drawings wherein the illustrations are for the purpose of describing the preferred embodiment of the invention and are not intended to limit the invention hereto, Figure 1 shows a cross-sectional view of a closure insert assembly 10 which is attachable to the top of a control rod drive mechanism. A plurality of such control rod drive mechanisms, each of which includes such a closure insert assembly 10, are attached to the top of a nuclear reactor vessel head. Closure insert assembly 10 is composed of a body 12, a vent nut 14 which is threadably received on body 12, and a vent plug 15, the end of which is threadably attached to vent nut 14.

Body 12 comprises an upper hub portion 18, a lower hub portion 20, and an intermediate hub portion 22. An annular groove 24 is provided in intermediate hub portion 22 to receive an O-ring 26 which provides a sealing surface when closure insert assembly 10 is installed in a control rod drive mechanism. An axially extending bore 28 is provided in body 12 and intersects a counterbore 30 provided in the end 32 of upper hub portion 18. Threads 34 are provided on the portion of the axial length of upper hub portion 18 adjacent intermediate hub portion 22. An annular groove 36 is provided in the portion of upper hub portion 18 adjacent the end thereof. An O-ring 38 and a back-up washer 40 are provided in annular groove 36 to provide a sealing surface with vent nut 14 when closure insert assembly 10 is in its fully assembled condition. The end 32 of upper hub portion 18 has a chamfered surface 42 to aid in the insertion of upper hub portion 18 into vent nut 14 during assembly. A conical ball seat 44, acting as a valve seat for a closure ball 66, is provided in the end 32 so as to intersect counterbore 30. There is no requirement that the included angle of conical ball seat 44 be a particular angle: it may be any angle within a large angular range. In addition, the axis of conical ball seat 44 need not be concentric with or even parallel to the longitudinal axis of body 12.

Vent nut 14 has provided therein a blind bore 46 having a diameter slightly larger than the diameter of upper hub portion 18 of body 12. A counterbore 48 is provided in one end of blind bore 46 and has threads 50 formed therein of the same pitch as threads 34 on upper hub portion 18 of body 12 so as to mate therewith when in the assembled condition. A blind bore 52 having threads 54 formed therein is provided in the end of vent nut 14 opposite the end in which blind bore 46 is formed. A passageway 56 is provided between the end of blind bore 52 and a surface 58 formed at the end of blind bore 46 allowing for the passage of air from or to the control rod drive mechanism after closure insert assembly 10 has been installed therein. The end of vent nut 14 in which blind bore 46 is formed also has a flanged surface 60 formed therein which is used for limiting the axial movement of vent nut 14 during the venting process hereinafter described.

Vent plug 15 comprises a standard quick-connect body assembly 16 and a mating quick-connect shut-off stem assembly 17. Body assembly 16 is typically similar to Swagelok (Trademark) Tube Fitting Part No. QC4-B-4AN and has threads 62 formed on one end thereof of the same pitch as threads 54 provided in blind bore 52 of vent nut 14. Shut-off stem assembly 17 is also a standard commercially available component and is similar to Swagelok (Trademark) Part No. QC4-D-400. Body assembly 16 is threadably connected to vent nut 14 by means of threads 62, 54 and shut-off stem assembly 17 is disconnected therefrom to permit venting of the nuclear reactor vessel as will be hereinafter described.

The valve mechanism contained within closure insert assembly 10 comprises a spring 64, the ball 66, and a valve member 68. Spring 64 is received in counterbore 30 in upper hub portion 18 of body 12 and is of sufficient length to protrude slightly outwardly of counterbore 30 when in the free state. Valve member 68 has an outer diameter less than the diameter of bore 46 in vent nut 14 and has a conical ball seat 70 formed therein. Valve member 68 is positioned in bore 46 so that the surface opposite conical ball seat 70 contacts surface 58 formed in the end of blind bore 46. Ball 66 is interposed between conical seats 44, 70 and compresses spring 64 when closure insert assembly 10 is in its fully assembled condition. As is the case with ball seat 44, the included angle of conical ball seat 70 may be any angle within a large angular range and does not have to be the same as the included angle for ball seat 44. In addition, the axes of conical ball seats 44 and 70 do not have to be parallel or concentric. The only requirement is that the axes of these seats must intercept the center of ball 66 and this happens automatically when closure insert assembly 10 is assembled since valve member 68 can move relative to surface 58 to compensate for any lack of alignment between valve components and/or non-normality of surface 58 with respect to the axis of body 12. In addition, because of the ability of valve member 68 to move laterally with respect to surface 58, a "self-centering" seat and ball combination results thus ensuring the application of a uniform compressive force to ball 66. Thus, ball 66 is always properly seated with respect to conical ball seats 44, 70. In addition, since conical seats are used, line contact rather than point contact with the ball results, allowing the application of a greater compressive force to the ball ensuring a tight seal without damage to the ball or the ball seats.

The end of a typical control rod drive mechanism to be closed is shown in Figure 2 and is usually a tubular housing 72 having a first bore 74 which intersects a second bore 76 forming a shoulder 78. First bore 74 has a diameter slightly greater than that for the lower hub portion 20 of body 12 while second bore 76 has a diameter slightly greater than that for intermediate hub portion 22 of body 12. A portion of second bore 76 adjacent the end of tubular housing 72 has threads 80 formed therein to provide means for retaining the closure insert assembly 10 therewithin.

Prior to insertion of closure insert assembly 10 into tubular housing 72, an O-ring 82 is received within second bore 76 and positioned therein so as to contact shoulder 78. When closure insert assembly 10 is inserted into tubular housing 72, positive seals are provided by O-rings 26, 82 between body 12 and tubular housing 72, as shown in Figure 3. After insertion of closure insert assembly 10 into housing 72, a retaining ring 84 is received over vent nut 14 and positioned so as to contact transverse surface 86 on body 12. Retaining ring 84 comprises a base portion 88 having an inner diameter slightly greater than the outer diameter of flanged surface 60 on vent nut 14, and a boss-like portion 90 axially offset from base portion 88 and having an inner diameter smaller than the outer diameter of flanged surface 60 on vent nut 14 but greater than the outer diameter of vent nut 14. The axial offset of the boss-like portion 90 with respect to base portion 88 is sufficient to allow for the partial unthreading of vent nut 14 with respect to body 12 when in the assembled condition.

Closure insert assembly 10 is retained within tubular housing 72 by means of an abutment ring 92 which is received over vent nut 14 and which has threads 94 on the outer periphery thereof of the same pitch as threads 80 in second bore 76 of tubular housing 72 so as to mate therewith. A plurality of jacking screws 96 are provided on a bolt circle in abutment ring 92 and are threadably advanceable therein so as to contact and compress retaining ring 84 when in the assembled state. Such compression results in the compression of O-ring 82 and the positive sealing of tubular housing 72 by closure insert assembly 10 and thus the positive sealing of the control rod drive mechanism.

Typically, when closure insert assembly 10 is installed in the tubular housing 72 of a control rod drive mechanism, ball 66 firmly engages conical ball seats 44, 70 preventing air from entering into or escaping from the control rod drive mechanism. If, however, water is to be added to the reactor primary coolant system, shut-off stem assembly 17 is disconnected from body assembly 16 and vent nut 14 is threadably retracted on body 12 until flanged surface 60 on vent nut 14 contacts boss-like portion 90 of retaining ring 84, as shown in Figure 4. The amount of retraction permitted is sufficient to allow spring 64 to expand resulting in ball 66 moving away from conical ball seat 44. This movement of ball 66 provides a passageway for the exit of air from the control rod drive mechanism thus ensuring that the coolant system can be properly and completely filled. After the coolant system has been filled, vent nut 14 is threadably advanced on body 12 causing ball 66 to compress spring 64 and firmly engage conical ball seat 44 thus closing the valve mechanism preventing any further air from entering into or escaping from the control rod drive mechanism. Shut-off stem assembly 17 is then reconnected to body assembly 16. A similar approach is taken, i.e., stem assembly 17 is disconnected from body assembly 16 and vent nut 14 is loosened on body 12 causing ball 66 to disengage conical valve seat 44, in order to allow air to enter the control rod drive mechanism. This operation is necessary when the coolant water level in the reactor must be reduced such as at refueling time. The introduction of air at that time greatly assists in speeding the coolant water removal process.

**Claims**

1. A ball valve for regulating the flow of fluid through a device (10), the ball valve comprising a valve seat (44) within the device (10), the valve seat (44) having a conical seating surface formed therein and an orifice (30) passing through the valve seat (44) and intersecting the conical seating surface, a ball seat (70) within the device (10) and oppositely disposed from the valve seat (44), the ball seat (70) having a conical seating surface formed therein, and a ball (66) interposed between the valve seat (44) and the ball seat (70) for selective engagement and disengagement with the valve seat (44) to cause closing and opening of the orifice (30) to regulate the flow of fluid therethrough, characterised in that means (64) is provided for biasing the ball (66) away from the conical seating surface in the valve seat (44), the valve seat (44) is longitudinally adjustable relative to the ball seat (70) to provide said selective engagement and disengagement of the ball (66) with the valve seat (44), and one (70) of the seats (44, 70) is laterally movable with respect to the other (44) to cause the ball (66) to be self-centering with respect to the seats when the seats are adjusted longitudinally with respect to each other.

2. A ball valve according to claim 1, wherein the self-centering of the ball (66) with respect to the seats (44, 70) causes the seats to contact the ball along minor circumferences thereon.

3. A ball valve according to claim 1 or claim 2, wherein relative longitudinal adjustment of the seats (44, 70) towards each other cause the seats (44, 70) to engage the ball (60) to close the orifice (30) to prevent the flow of fluid therethrough.

4. A ball valve according to any one of the preceding claims, wherein relative longitudinal adjustment of the seats (44, 70) away from each other causes the biasing means (64) to urge the ball (66) away from the valve seat (44) to open the orifice (30) to permit the flow of fluid therethrough.

5. A ball valve according to any one of the preceding claims, wherein said longitudinal adjustment movement of the valve seat (44) with respect to the ball seat (70) is permitted through a predetermined distance sufficient to allow the selective engagement and disengagement of the ball (66) with the seats (44, 70).

6. A ball valve according to any one of the preceding claims, wherein one (44) of the seats (44, 70) is integrally formed in the device (10).

7. A ball valve according to any one of the preceding claims, wherein the included angles of the conical seating surfaces provided in the valve seat (44) and the ball seat (70) differ.

8. A ball valve according to any one of claims 1 to 7, wherein the device (10) is a closure device and the ball valve enables venting of an article closed by the device.

9. A ball valve according to any one of claims 1 to 7, wherein the device (10) is a closure insert assembly for a control rod drive mechanism (72) for a nuclear reactor and is fitted to the mechanism (72), the ball valve enabling venting of the mechanism (72).

10. Use of a ball valve according to any one of claims 1 to 7 for regulating the flow of fluid through a device (10) in the form of a closure insert assembly for closing a control rod drive mechanism (72) for a nuclear reactor, whereby the control rod drive mechanism may be selectively vented.

**Patentansprüche**

1. Kugelventil zur Regelung des Flusses eines Fließmittels durch ein Vorrichtung (10), mit einem Ventilsitz (44) innerhalb der Vorrichtung (10), der eine konische, darin gebildete Sitzoberfläche und eine Öffnung (30) aufweist, welche durch den Ventilsitz (44) hindurchgeht und die konische Sitzoberfläche schneidet, und mit einem Kugelsitz (70) innerhalb der Vorrichtung (10), der gegenüber dem Ventilsitz (44) angeordnet ist und eine darin gebildete konische Sitzoberfläche aufweist, und mit einer zwischen dem Ventilsitz (44) und dem Kugelsitz (7) zwischengeschalteten Kugel (66) für den wahlweisen Eingriff mit dem Ventilsitz (44) und für die Entlastung von diesem, um ein Schließen und Öffnen der Öffnung (30) zu bewirken und den Fluß des Fließmittels durch diesen hindurch zu regulieren, dadurch gekennzeichnet, daß ein Einrichtung (64) vorgesehen ist zum Vorspannen der Kugel (66) von der konischen Sitzoberfläche in dem Ventilsitz (44) fort, der Ventilsitz (44) relativ zum Kugelsitz (70) länglich einstellbar ist, um den wahlweisen Eingriff und die Entlastung der Kugel (66) mit dem Ventilsitz (44) vorzusehen, und daß einer (70) der Sitze (44, 70) bezüglich dem anderen (44) seitlich bewegbar ist, um die Kugel (66) bezüglich der Sitze selbst zentrierend zu machen, wenn die Sitze längs zueinander einjustiert werden.

2. Kugelventil nach Anspruch 1, dadurch gekennzeichnet, daß die Selbstzentrierung der Kugel (66) bezüglich der Sitze (44, 70) eine Berührung der Sitze mit der Kugel längs darauf befindlicher kleinerer Umkreise hoervorruft.

3. Kugelventil nach Anspruch 1 oder 2, dadurch gekennzeichnet, daß die relative Längseinstellung der Sitze (44, 70) zueinander den Eingriff der Sitze (44, 70) mit der Kugel (66) hervorruft, um die Öffnung (30) zu schließen und die Fließmittelströmung durch die Öffnung hindurch zu verhindern.

4. Kugelventil nach einem der vorhergehenden Ansprüche, dadurch gekennzeichnet, daß die relative Längseinstellung der Sitze (44, 70) voneinander fort das Drücken der Vorspanneinrichtung (64) der Kugel (66) vom Ventilsitz (44) fort hervorruft, um die Öffnung (30) zu öffnen und die Fließmittelströmung durch diese hindurch zu gestatten.

5. Kugelventil nach einem der vorhergehenden Ansprüche, dadurch gekennzeichnet, daß die Längseinstellung des Ventilsitzes (44) bezüglich des Kugelsitzes (70) über einen vorbestimmten Abstand möglich wird, der ausreicht, um den wahlweisen Eingriff der Kugel (66) mit den Sitzen (44, 70) und deren Entlastung von diesen zur erlauben.

6. Kugelventil nach einem der vorhergehenden Ansprüche, dadurch gekennzeichnet, daß einer (44) der Sitze (44, 70) einstückig in der Vorrichtung (10) gebildet ist.

7. Kugelventil nach einem der vorhergehenden Ansprüche, dadurch gekennzeichnet, daß sich die eingeschlossenen Winkel der konischen Sitzoberflächen, die in dem Ventilsitz (44) und dem Kugelsitz (70) vorgesehen sind, unterschieden.

8. Kugelventil nach einem der Ansprüche 1 bis 7, dadurch gekennzeichnet, daß die Vorrichtung (10) eine Verschlußvorrichtung ist und das Kugelventil das Entlüften eines durch die Vorrichtung geschlossenen Gegenstandes ermöglicht.

9. Kugelventil nach einem der Ansprüche 1 bis 7, dadurch gekennzeichnet, daß die Vorrichtung (10) eine Verschlußeinsatzanordnung für einen Steuerstangenantriebsmechanismus (72) für einen Kernreaktor ist und an dem Mechanismus (72) passend angebracht ist, wobei das Kugelventil das Entlüften des Mechanismus (72) ermöglicht.

10. Verwendung eines Kugelventils nach einem der Ansprüche 1 bis 7 für die Regulierung der Fließmittelströmung durch eine Vorrichtung (10) in der Form einer Verschlußeinsatzanordnung für das Verschließen eines Steuerstabantriebsmechanismus (72) für einen Kernreaktor, wodurch der Steuerstabantriebsmechanismus wahlweise entlüftet werden kann.

## Revendications

1. Soupape à bille pour le réglage de l'écoulement de fluide à travers un dispositif (10), la soupape à bille comportant un siège de soupape (44) intérieur au dispositif (10), le siège de soupape (44) présentant une surface de siège conique et un orifice (3) traversant le siège de soupape (44) et coupant la surface de siège conique, un siège de bille (7) intérieur au dispositif et situé à l'opposé du siège de soupape (44), le siège de bille (70) ayant une surface de siège conique qui y est façonnée, et une bille (66) interposée entre le siège de soupape (44) et le siège de bille (70) pour prendre et perdre sélectivement contact avec le siège de soupape (44) afin de provoquer l'ouverture et la fermeture de l'orifice (30) pour régler l'écoulement de fluide à travers ce dernier, caractérisée en ce qu'un moyen (64) est prévu pour solliciter la bille (66) à l'opposé de la surface de siège conique du siège de soupape (44), le siège de soupape (44) est réglable longitudinalement par rapport au siège de bille (70) pour fournir lesdites prise et perte de contact sélectives de la bille (66) avec le siège de soupape (44), et l'un (70) des sièges (44, 70) est mobile latéralement par rapport à l'autre (44) pour provoquer un auto-centrage de la bille (66) par rapport aux sièges quand les sièges sont longitudinalement ajustés l'un par rapport à l'autre.

2. Soupape à bille selon la revendication 1, caractérisée en ce que l'auto-centrage de la bille (66) par rapport aux sièges (44, 70) amène les sièges à entrer en contact avec la bille suivant des circonférences mineures de celle-ci.

3. Soupape à bille selon la revendication 1 ou la revendication 2, caractérisée en ce qu'un ajustement longitudinal des sièges (44, 70) l'un vers l'autre amène les sièges (44, 70) à porter contre la bille (66) afin de fermer l'orifice (30) pour empêcher du fluide de le tranverser.

4. Soupape à bille selon l'une quelconque des revendications précédentes, caractérisée en ce qu'un ajustement longitudinal des sièges (44, 70) à l'opposé l'un de l'autre amène le moyen de sollicitation (64) à solliciter la bille (66) à l'opposé du siège de soupape (44) afin d'ouvrir l'orifice (30) pour permettre à du fluide de le traverser.

5. Soupape à bille selon l'une quelconque des revendications précédentes, caractérisée en ce que ledit réglage longitudinal du siège de soupape (44) par rapport au siège de bille (70) est autorisé sur une distance déterminée suffisante pour permettre la prise et la perte de contact sélectives de la bille (66) avec les sièges (44, 70).

6. Soupape à bille selon l'une quelconque des revendications précédentes, caractérisée en ce que l'un (44) des sièges (44, 70) est façonné d'un seul tenant dans le dispositif (10).

7. Soupape à bille selon l'une quelconque des revendications précédentes, caractérisée en ce que les angles inclus des surfaces de siège coniques prévues dans le siège de soupape (44) et dans le siège de bille (7) différent.

8. Soupape à bille selon l'une quelconque des revendications 1 à 7, caractérisée en ce que le dispositif (10) est un dispositif de fermeture et la soupape à bille permet la mise à l'air libre d'un article fermé par le dispositif.

9. Soupape à bille selon l'une quelconque des revendications 1 à 7, caractérisée en ce que le dispositif (10) est un ensemble rapporté de fermeture pour mécanisme d'entraînement de barre de réglage (72) de réacteur nucléaire et est posé sur le mécanisme (72), la soupape à bille permettant la mise à l'air libre du mécanisme (72).

10. Utilisation d'une soupape à bille selon l'une quelconque des revendications 1 à 7 pour le réglage de l'écoulement d'un fluide à travers un dispositif (10) sous la forme d'un ensemble rapporté de fermeture destiné à fermer un mécanisme d'entraînement de barre de réglage (72) de réacteur nucléaire, de façon que le mécanisme d'entraînement de barre de réglage puisse être sélectivement mis à l'air libre.

Fig. 1

Fig. 2

Fig. 3

Fig. 4